# EUROPÄISCHE PATENTSCHRIFT

(11) **EP 3 702 576 B1**
(45) Veröffentlichungstag und Bekanntmachung des Hinweises auf die Patenterteilung: **06.04.2022**
(21) Anmeldenummer: 20158151.9
(22) Anmeldetag: 19.02.2020
(51) Int. Cl.: E21B 7/02, E21B 15/00, E21B 19/083, E21B 19/14

(54) **ERDBOHRVORRICHTUNG UND VERWENDUNG EINER ERDBOHRVORRICHTUNG**
EARTH BORING DEVICE AND USE OF AN EARTH BORING DEVICE
DISPOSITIF DE FORAGE DU SOL ET UTILISATION D'UN DISPOSITIF DE FORAGE DU SOL

(30) Priorität: 20.02.2019 DE 102019001200
(43) Veröffentlichungstag der Anmeldung: 02.09.2020
(73) Patentinhaber: TRACTO-TECHNIK GmbH & Co. KG, 57368 Lennestadt (DE)
(72) Erfinder: Jostes, Lucas, 57413 Finnentrop (DE); Hermes, Stefan, 57368 Lennestadt (DE)
(74) Vertreter: Verhasselt, Jörn

(56) Entgegenhaltungen:
- EP-B1- 0 886 034
- DE-B3-102014 018 100

## Beschreibung

Die Erfindung betrifft eine Erdbohrvorrichtung und eine Verwendung einer Erdbohrvorrichtung.

Erdbohrvorrichtungen, insbesondere Horizontalbohrvorrichtungen, kommen zum Einsatz, um in grabenloser Bauweise Erdbohrungen beispielsweise für Versorgungs- und Entsorgungsleitungen in das Erdreich einzubringen bzw. bereits verlegte Altleitungen grabenlos auszutauschen. Zum Einbringen der Erdbohrung wird meist ein Bohrgestängeschüsse aufweisendes Bohrgestänge verwendet, bei dem die Bohrgestängeschüsse miteinander verbindbar sind.

Es ist beispielsweise aus EP 0 886 034 B1 bekannt, einen in einem Rahmen hin und her bewegbaren Schlitten zum Vorschieben und/oder Ziehen eines Bohrgestänges zu verwenden. Der Schlitten weist eine Aufnahme für einen Bohrgestängeschuss auf, so dass der Bohrgestängeschuss in Richtung einer Vorschubachse zur Erstellung der Erdbohrung in der Aufnahme bewegt werden kann. Der auf den Bohrgestängeschuss wirkende Antrieb kann rotatorisch und/oder translatorisch auf den Bohrgestängeschuss in der Aufnahme wirken.

Zum translatorischen Antreiben des Schlittens in dem Rahmen ist es für große und leistungsstarke Erdbohrvorrichtungen bekannt, mehrere Hydraulikmotoren zu verwenden, die für den Antrieb des Schlittens im Rahmen, d.h. für die Hin- und Zurückbewegung, eingesetzt werden. Jeder der Hydraulikmotoren kann ein Planetengetriebe aufweisen, das ein Vorschubritzel aufweist, welches an einer fest im Rahmen angeordneten Zahnstange eingreift und den Schlitten im Rahmen, insbesondere translatorisch, bewegt. Es ist damit für große und leistungsstarke Erdbohrvorrichtungen bekannt, mehr als einen Motor zu verwenden, um beispielsweise in festen Böden die Erdbohrung durchführen zu können.

Aus DE 10 2014 018 100 B3 ist zum Antrieb eines Schlittens einer Erdbohrvorrichtung ein Drehantrieb vorhanden, der indirekt oder direkt ein Ritzel antreibt, das mit einer Zahnstange in Eingriff bringbar ist. Der Drehantrieb steht mit einem weiteren Ritzel in Eingriff, das in Eingriff mit der Zahnstange bringbar ist. Ein und derselbe Drehantrieb treiben direkt oder indirekt das Ritzel, das mit der Zahnstange in Eingriff bringbar ist, als auch das weitere Ritzel an. Beide Ritzel werden von ein und demselben Drehantrieb indirekt oder direkt angetrieben.

Obwohl die bekannten Erdbohrvorrichtungen einfach aufgebaut sind und mit den Erdbohrvorrichtungen gute Ergebnisse im Hinblick auf entsprechende Erdbohrungen durchführbar sind, hat es sich herausgestellt, dass ein erhöhter Verschleiß an Ritzel oder Zahnstange möglich ist. Hierdurch kann die Standzeit der Erdbohrvorrichtung verringert werden und/oder Wartungsintervalle werden verringert und/oder eine Nachjustage eines Zahnkopfspiels wird notwendig.

Aufgabe der Erfindung ist es daher, eine Erdbohrvorrichtung mit einem eine Zahnstange und ein Zahnrad aufweisenden Antrieb hinsichtlich der Standzeit zu verbessern und Wartungsintervalle zu vergrößern.

Die Aufgabe wird durch die Gegenstände der nebengeordneten Patentansprüche gelöst. Vorteilhafte Weiterbildungen der Gegenstände der nebengeordneten Patentansprüche sind Gegenstand der jeweiligen abhängigen Patentansprüche und ergeben sich aus der nachfolgenden Beschreibung.

Kerngedanke der Erfindung ist das Vorsehen eines Kraftentlastungspfades zum Entlasten des Zahnrads von einer radial eingeleiteten bzw. erzeugten Kraft. Hierdurch kann sich das Zahnrad abstützen und eine durch die Zahnräder erzeugte Radialkraft kann abgeleitet werden. Durch das Abstützen kann ferner ein Zahnkopfspiel im Wesentlichen definiert bzw. vorbestimmt eingestellt werden. Der Abstand zwischen dem Zahnrad und der Zahnstange oder einem zwischen dem Zahnrad und der Zahnstange zwischengestalteten weiteren Zahnrad kann eingestellt werden. Eine direkte Krafteinleitung der von dem Zahnrad ausgehenden Radialkraft kann damit über den Kraftentlastungspfad abgeführt werden. Standzeiten von Zahnrad, Zahnstange und/oder gegebenenfalls weiteren zwischengeschalteten Zahnrädern werden erhöht. Insbesondere ist für mindestens ein mit der Zahnstange (unmittelbar) kämmendes Zahnrad ein Kraftentlastungspfad ausgebildet. Die Lagerungen der Zahnräder bzw. des Zahnrades können geringeren Belastungen ausgesetzt sein, so dass die Lagerungen günstiger ausgelegt werden können.

Die Erfindung schafft eine Erdbohrvorrichtung mit einer Bohrlafette und einem auf der Bohrlafette hin und her bewegbaren Schlitten, wobei zum Antrieb des Schlittens mindestens ein Zahnrad vorhanden ist. Die Drehbewegung des Zahnrades kann in eine Linearbewegung mittels einer Zahnstange umgewandelt werden. Ein Kraftentlastungspfad ist vorhanden zum Entlasten des Zahnrads von einer radial eingeleiteten bzw. erzeugten Kraft. Dabei ist ein Abschnitt des Kraftentlastungspfades mittels eines mit dem Zahnrad verbundenen Stützelements gebildet und ein Abstützelement erstreckt sich entlang der Zahnstange versetzt zu dieser und, um das Stützelement bei der Bewegung des Schlittens abzustützen.

Der Begriff "Erdbohrvorrichtung" umfasst im Sinne der Beschreibung jedwede Vorrichtung, die insbesondere ein Gestängeschüsse aufweisendes Bohrgestänge in einem bestehenden oder zu erstellenden Kanal im Erdreich bewegt, um eine Bohrung, insbesondere ein Horizontalbohrung (HD), zu erstellen oder aufzuweiten oder um Leitungen oder andere lange Körper in das Erdreich einzubringen. Bei der Erdbohrvorrichtung kann es sich insbesondere um eine HD-Vorrichtung handeln. Eine Erdbohrvorrichtung im Sinne der Beschreibung umfasst eine ein Bohrgestänge antreibende Vorrichtung, die Erdreich verdrängend arbeitet, und das Bohrgestänge rotatorisch und/oder translatorisch in längsaxialer Richtung des Bohrgestänges in das Erdreich einbringt. Das Einbringen hinsichtlich der translatorischen Bewegung in längsaxialer Richtung kann ziehend oder schiebend erfolgen.

Der Begriff "Horizontalbohrung (HD, horizontal drilling)" im Sinne der Beschreibung umfasst insbesondere jede Art von bestehenden oder zu erstellenden, vorzugsweise zumindest abschnittsweise horizontal verlaufenden, Kanälen in einem Körper, insbesondere Erdkanäle einschließlich Erdbohrungen, Felsbohrungen oder Erdleitungen sowie unterirdische oder oberirdische Rohrleitungen und Wasserkanäle, die sich durch Einsatz einer entsprechenden Erdbohrvorrichtung herstellen oder einziehen lassen.

Der Begriff "Bohrlafette" umfasst ein, insbesondere fahrbares Gestell, auf dem ein Schlitten zum Bewegen des Bohrgestänges vorgesehen sein kann, der in Richtung der Bohrgestängeachse hin und her bewegbar ist, um das Bohrgestänge drückend oder ziehend im Erdreich zu bewegen. Der Schlitten kann relativ zur Bohrlafette unter Verwendung eines Linearantriebs, wobei Zahnrad und Zahnstange Teil des Linearantriebs sind, bewegt werden. Die Bohrlafette kann ferner eine oder mehrere Klemmvorrichtungen, über die das Bohrgestänge bzw. ein anzusetzender Gestängeschuss fixiert werden kann, aufweisen. Es kann vorgesehen sein, dass eine Klemmvorrichtung an der Bohrlafette vorgesehen ist, mittels derer das freie Ende des Bohrgestänges, d.h. das Ende des Bohrgestänges, welches aus dem Erdreich herausragt, fixiert werden kann, um ein Verbinden eines neu anzusetzenden Gestängeschusses mit dem schon verbohrten Bohrgestänge zu ermöglichen.

An dem Schlitten kann eine Aufnahme vorgesehen sein, die einen neu hinzuzufügenden bzw. einen zu lösenden Gestängeschuss, insbesondere endseitig, derart aufnehmen kann, dass die Aufnahme den Gestängeschuss kraft- und/oder formschlüssig fixiert, um den Gestängeschuss insbesondere drehend um seine Längsachse antreiben zu können. Die Aufnahme kann beispielsweise derart ausgestaltet sein, dass die Aufnahme endseitig in Eingriff mit einem zu lösenden bzw. zu verschraubenden Gestängeschuss gelangt und ein Formschluss erzeugt wird. Wird die Aufnahme gedreht, so kann der von der Aufnahme aufgenommene Gestängeschuss - gegebenenfalls nachdem die Aufnahme mit dem Gestängeschuss verschraubt ist - gedreht werden. Der Schlitten kann auf der Bohrlafette bzw. einer mit der Bohrlafette verbundenen Auflage mit Abstandselementen aufliegen. Die Bohrlafette und/oder die Auflage kann profiliert sein und die Abstandselemente können als Rollen ausgebildet sein. Es sind als Abstandselemente auch Kufen möglich. Der Schlitten kann an der Bohrlafette hängend oder aufliegend geführt sein. Der Schlitten kann weitere Bauelemente umfassen bzw. aufweisen, wobei der Schlitten entlang einer Bahn, insbesondere rein translatorisch, zur Bohrlafette bewegt werden kann.

Das Zahnrad kann direkt auf der Welle eines Drehantriebs angeordnet sein, so dass das Zahnrad direkt vom Drehantrieb angetrieben wird. Das Zahnrad kann direkt bzw. unmittelbar mit der Zahnstange kämmen. Es kann jedoch auch vorgesehen sein, dass, wie es die DE 10 2014 018 100 B3 beschreibt, ein Antriebsritzel vorhanden ist, welches mit zwei Zahnrändern kämmt, die ihrerseits mit der Zahnstange kämmen. Dabei werden zwei symmetrisch zum Antriebsritzel angeordnete Zahnränder verwendet und das Antriebsritzel ist versetzt zur Zahnstange angeordnet, ohne mit dieser zu kämmen. Insofern kann hinsichtlich des Antriebs vollumfänglich auf die DE 10 2014 018 100 B3 Bezug genommen werden. Sofern ein Antriebsritzel mit zwei mit der Zahnstange kämmenden Zahnrädern vorhanden ist, kann für jedes der Zahnräder, die mit der Zahnstange kämmen, ein Kraftentlastungspfad vorhanden sein.

Der Begriff "Kraftentlastungspfad" umfasst im Sinne der Beschreibung einen Pfad, von miteinander in Kontakt bzw. Kraftschluss stehenden Elementen, mit denen eine Entlastung der vom Zahnrad ausgehenden bzw. in das Zahnrad radial eingeleiteten Kraft erfolgt.

Eine Entlastung im Sinne der Beschreibung ist ein zusätzliches Vorsehen zu der Antriebs- bzw. Abtriebswelle des Drehantriebs, welche ebenfalls zwangsläufig Kräfte aufnimmt. Der Kraftentlastungspfad wird insbesondere beabstandet von einem Abschnitt der Abtriebswelle gebildet, die zwischen dem Drehantrieb und dem Zahnrad vorliegt.

Erfindungsgemäß ist ein Abschnitt des Kraftentlastungspfades mittels eines mit dem Zahnrad verbundenen Stützelements gebildet. Durch das Stützelement wird eine Radialkraft vom Zahnrad abgeleitet und auch das

Zahnrad gestützt. Das Zahnkopfspiel kann mittels eines Einwirkens auf das Stützelement eingestellt werden, indem ein Abstand zwischen Zahnrad und Zahnstange mittels des Stützelements vorgegeben wird.

In einer bevorzugten Ausführungsform erstreckt sich ein Abstützelement entlang der Zahnstange versetzt zu dieser und ist angeordnet, um bei der Bewegung des Schlittens das Stützelement abzustützen. Das Abstützelement kann auf das Stützelement einwirken und die vom Zahnrad eingeleitete Radialkraft aufnehmen. Das Abstützelement kann insbesondere an der Bohrlafette angeordnet sein und den Bereich des Kraftentlastungspfads bilden, in den die Radialkraft abgeleitet wird. Das insbesondere starr mit der Bohrlafette verbundene Abstützelement kann damit ein Ende eines Kraftentlastungspfades bilden.

In einer bevorzugten Ausführungsform ist das Stützelement koaxial zum Zahnrad, insbesondere beabstandet zum Antrieb für das Zahnrad, angeordnet. Hierdurch kann an einer Stelle das Zahnrad abgestützt werden, die effektiv ist und es kann auf das Zahnrad entsprechend eingewirkt werden. Ein einfacher Zugriff ist möglich. Das Stützelement kann an der Antriebswelle bzw. Abtriebswelle für das Zahnrad vorgesehen sein. In einer bevorzugten Ausführungsform ist das Stützelement mit dem Zahnrad umlaufend ausgestaltet, was zu einer einfachen Ausgestaltung und einer einfachen Planung der Erdbohrvorrichtung führt. In einer bevorzugten Ausführungsform kann das Stützelement relativ zum Zahnrad unter Zwischenschaltung eines Lagers beweglich zu diesem ausgestaltet sein. Es ist damit möglich, dass das Stützelement selbst nicht mit dem Zahnrad umzulaufen braucht. Das Stützelement kann in Ruhe verbleiben und über das Lager kann die Kraft vom Stützelement abgeleitet werden, insbesondere auf ein gegebenenfalls vorgesehenes Abstützelement.

In einer bevorzugten Ausführungsform ist das Stützelement eine Druckrolle, was die Ausgestaltung erheblich vereinfacht. Der Umfang des Stützelements ist bevorzugt rund, insbesondere kreisförmig.

In einer bevorzugten Ausführungsform kann ein Antriebsritzel unmittelbar mit der Zahnstange kämmen oder mindestens ein weiteres Zahnrad ist vorgesehen, das im kämmenden Eingriff mit dem Antriebsritzel und der Zahnstange steht, wodurch Ausgestaltungen möglich sind, wie sie in DE 10 2014 018 100 B3 offenbart sind.

Die Erfindung schafft auch eine Verwendung einer Erdbohrvorrichtungen, wobei eine Erdbohrvorrichtung verwendet wird, die eine Bohrlafette und einen auf der Bohrlafette hin und her bewegbaren Schlitten aufweist, wobei zum Antrieb des Schlittens mindestens ein Zahnrad verwendet wird, dessen Drehbewegung in eine Linearbewegung mittels einer Zahnstange umgewandelt wird. Ein Kraftentlastungspfad wird verwendet zum Entlasten des Zahnrads von einer radial eingeleiteten bzw. erzeugten Kraft.

Die Erfindung wird hinsichtlich zweier Aspekte beschrieben, die eine Erdbohrvorrichtung und eine Verwendung einer Erdbohrvorrichtung betreffen. Die Ausführungen zu den einzelnen Aspekten ergänzen einander, so dass die Ausführungen für die Erdbohrvorrichtung auch als Ausführungen der Beschreibung für die Verwendung und umgekehrt zu verstehen sind. Mit der Beschreibung der Erdbohrvorrichtung sind auch Merkmale im Hinblick auf die Verwendung offenbart und umgekehrt.

Die vorstehenden Ausführungen stellen ebenso wie die nachfolgende Beschreibung beispielhafter Ausführungsformen keinen Verzicht auf bestimmte Ausführungsformen oder Merkmale dar.

Die Erfindung wird im Folgenden beispielhaft anhand eines in den Figuren dargestellten Ausführungsbeispiels näher erläutert.

In den Zeichnungen zeigt:
- Fig. 1: eine Seitenansicht einer Erdbohrvorrichtung in schematischer Darstellung;
- Fig. 2: einen Ausschnitt einer Ansicht der Erdbohrvorrichtung in Richtung der Bohrgestängeachse; und
- Fig. 3: eine Ansicht des Antriebs der Erdbohrvorrichtung von unten, wobei Teile der Bohrlafette nicht dargestellt sind, um die Ansicht auf Zahnrad und Zahnstange zu ermöglichen.

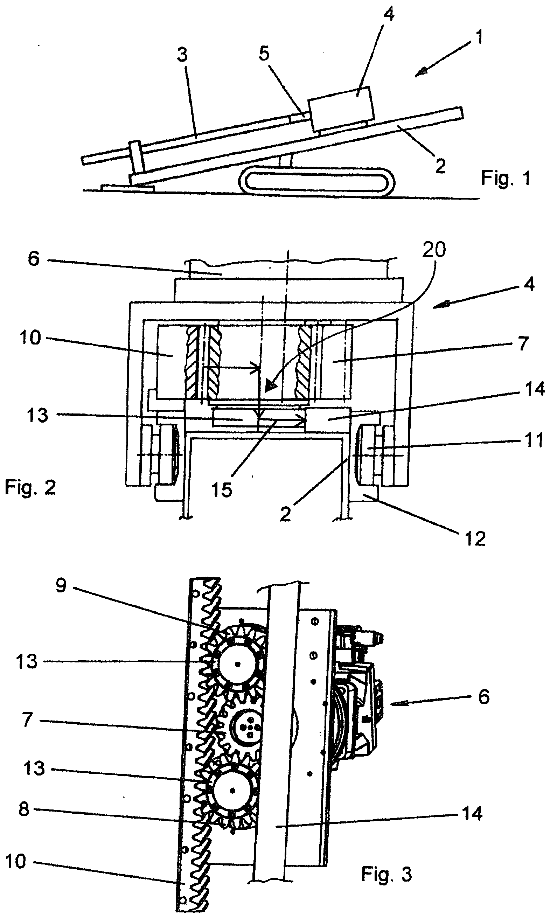

Fig. 1 zeigt eine Erdbohrvorrichtung 1. Die Erdbohrvorrichtung 1 weist eine Bohrlafette auf, die als Führung für einen Schlitten 4 dient. Der Schlitten 4 ist so ausgestaltet, dass er über eine Aufnahme 5, die als ein Adapter für einen Gestängeschuss bzw. das Bohrgestänge ausgestaltet ist, einen Bohrstrang 3 mit Schub- oder Zugkräften und/oder mit Drehmoment/Drehzahl beaufschlagen kann.

Fig. 2 zeigt einen Ausschnitt der in Fig. 1 dargestellten Erdbohrvorrichtung 1 in einer Detailansicht, wobei die Bohrlafette 2 mit einem Teil des Antriebs und Führungselementen dargestellt ist. Der Schlitten 4 weist einen aus einem Hydraulikmotor mit einem Getriebe bestehenden Drehantrieb 6 auf. Der Drehantrieb 6 treibt eine Abtriebswelle an, auf der ein Zahnrad 7 in Form eines Antriebsritzels montiert ist, das wiederum zwei weitere Zahnräder 8, 9 antreibt, die jeweils in eine an der Bohrlafette 2 angebrachte Zahnstange 10 eingreifen. Die Rotation des Zahnrads 7 sowie der weiteren Zahnräder 8, 9 wird in eine Linearbewegung des Schlittens 4 umgewandelt.

Der Schlitten 4 wird für die Linearbewegung über Laufrollen 11, die in Führungsschienen 12 an der Bohrlafette 2 abrollen, geführt.

Wie der Fig. 3 zu entnehmen ist, sind koaxial zu den weiteren Zahnrädern 8, 9 an diesen jeweils als Druckrollen ausgestaltete Stützelemente 13 montiert. Die Stützelemente 13 sind so ausgestaltet, dass sie auf einem als Laufschiene ausgestalteten Abstützelement 14 abrollen können. Die durch das Eingreifen der weiteren Zahnräder 8, 9 in die Zahnstange 10 auf die Lagerungen der weiteren Zahnräder 8, 9 und auf die Lagerungen des Drehantriebs 6 auftretenden Radialkräfte können über einen durch Pfeile 15 dargestellten Kraftentlastungspfad 20 abgeleitet werden.

## Patentansprüche

1. Erdbohrvorrichtung (1) mit einer Bohrlafette (2) und einem auf der Bohrlafette (2) hin und her bewegbaren Schlitten (4), wobei zum Antrieb (6) des Schlittens (4) mindestens ein Zahnrad (7, 8, 9) vorhanden ist, dessen Drehbewegung in eine Linearbewegung mittels einer Zahnstange (10) umgewandelt wird, **gekennzeichnet durch** einen Kraftentlastungspfad (20) zum Entlasten des Zahnrads von einer radial eingeleiteten Kraft, wobei ein Abschnitt des Kraftentlastungspfades (20) mittels eines mit dem Zahnrad (8, 9) verbundenen Stützelements (13) gebildet ist und sich ein Abstützelement (14) entlang der Zahnstange (10) versetzt zu dieser erstreckt und angeordnet ist, um das Stützelement (13) bei der Bewegung des Schlittens (4) abzustützen.

2. Erdbohrvorrichtung (1) nach Anspruch 1, **dadurch gekennzeichnet, dass** das Stützelement (13) koaxial zum Zahnrad (7, 8, 9) beabstandet zum Antrieb für das Zahnrad (7, 8, 9) angeordnet ist.

3. Erdbohrvorrichtung (1) nach Anspruch 1 oder 2, **dadurch gekennzeichnet, dass** das Stützelement (13) mit dem Zahnrad (7, 8, 9) umlaufend ausgestaltet ist.

4. Erdbohrvorrichtung (1) nach einem der Ansprüche 1 bis 3, **dadurch gekennzeichnet, dass** das Stützelement (13) relativ zum Zahnrad (7, 8, 9) unter Zwischenschaltung eines Lagers beweglich ist.

5. Erdbohrvorrichtung (1) nach einem der Ansprüche 1 bis 4, **dadurch gekennzeichnet, dass** das Stützelement (13) eine Druckrolle ist.

6. Erdbohrvorrichtung (1) nach einem der Ansprüche 1 bis 5, **dadurch gekennzeichnet, dass** das Zahnrad (7, 8, 9) unmittelbar mit der Zahnstange (10) kämmt oder mindestens ein weiteres Zahnrad (7, 8, 9) vorgesehen ist, das in kämmendem Eingriff mit dem Zahnrad (7) und der Zahnstange (10) steht.

## Claims

1. Ground-drilling device (1) with a drilling carriage (2) and a sledge (4) that can be moved backwards and forwards on the drilling carriage (2), wherein at least one pinion (7, 8, 9) exists for driving (6) the sledge (4), the rotational movement of said pinion being converted into a linear movement by means of a rack (10), **characterised by** a force release path (20) for relieving the pinion of a force introduced radially, wherein a section of the force release path (20) is formed using a supporting element (13) linked to the pinion (8, 9) and a supporting element (14) extends along the rack (10), and is positioned offset to it, in order to support the supporting element (13) in moving the sledge (4).

2. Ground-drilling device (1) in accordance with Claim 1, **characterised in that** the supporting element (13) is positioned coaxially to the pinion (7, 8, 9), at a distance from the drive for the pinion (7, 8, 9).

3. Ground-drilling device (1) in accordance with Claim 1 or 2, **characterised in that** the supporting element (13) is designed circumferentially in relation to the pinion (7, 8, 9).

4. Ground-drilling device (1) in accordance with one of the Claims 1 to 3, **characterised in that** the supporting element (13) can be moved relative to the pinion (7, 8, 9) by interposing a bearing.

5. Ground-drilling device (1) in accordance with one of the Claims 1 to 4, **characterised in that** the supporting element (13) is a pressure roller.

6. Ground-drilling device (1) in accordance with one of the Claims 1 to 5, **characterised in that** the pinion (7, 8, 9) meshes directly with the rack (10), or at least one further pinion (7, 8, 9) is provided for, which is in meshing engagement with the pinion (7) and the rack (10).

## Revendications

1. Dispositif de forage de sol (1) avec un affût de forage (2) et un chariot (4) mobile en va-et-vient sur l'affût de forage (2), au moins une roue dentée (7, 8, 9) étant présente pour l'entraînement (6) du chariot (4), dont le mouvement de rotation est transformé en un mouvement linéaire au moyen d'une crémaillère (10), **caractérisé par** un chemin de décharge de force (20) pour décharger la roue dentée d'une force introduite radialement, une section du chemin de décharge de force (20) étant formée au moyen d'un élément d'appui (13) relié à la roue dentée (8, 9) et un élément de support (14) s'étendant le long de la crémaillère (10) de manière décalée par rapport à celle-ci et étant disposé pour supporter l'élément d'appui (13) lors du déplacement du chariot (4).

2. Dispositif de forage de sol (1) selon la revendication 1, **caractérisé en ce que** l'élément d'appui (13) est disposé coaxialement à la roue dentée (7, 8, 9) à une certaine distance de l'entraînement pour la roue dentée (7, 8, 9).

3. Dispositif de forage de sol (1) selon la revendication 1 ou 2, **caractérisé en ce que** l'élément d'appui (13) est conçu pour tourner avec la roue dentée (7, 8, 9).

4. Dispositif de forage de sol (1) selon l'une quelconque des revendications 1 à 3, **caractérisé en ce que** l'élément d'appui (13) est mobile par rapport à la roue dentée (7, 8, 9) avec interposition d'un palier.

5. Dispositif de forage de sol (1) selon l'une des revendications 1 à 4, **caractérisé en ce que** l'élément d'appui (13) est conçu comme un piston mobile.

6. Dispositif de forage de sol (1) selon l'une quelconque des revendications 1 à 5, **caractérisé en ce que** la roue dentée (7, 8, 9) s'engrène directement avec la crémaillère (10) ou qu'il est prévu au moins une autre roue dentée (7, 8, 9) qui s'engrène avec la roue dentée (7) et la crémaillère (10).
